# EUROPÄISCHE PATENTANMELDUNG

(11) **EP 1 014 610 A2**
(43) Veröffentlichungstag der Anmeldung: **28.06.2000**
(21) Anmeldenummer: 99440359.0
(22) Anmeldetag: 20.12.1999
(51) Int. Cl.: H04J 3/04, H04J 3/14, H04L 1/00

(54) **Anwendungsspezifische Halbleiterschaltung (ASIC) für den Einsatz in Ubertragungseinrichtungen eines digitalen Netwerks**

(30) Priorität: 23.12.1998 DE 19859835
(71) Anmelder: ALCATEL, 75008 Paris (FR)
(72) Erfinder: Willekes, Elmar, 70435 Stuttgart (DE); Stadlhoffer, Josef, 70734 Fellbach (DE)
(74) Vertreter: Rausch, Gabriele, Dr.

(57) **Zusammenfassung**

Die Erfindung betrifft eine anwendungsspezifische Halbleiterschaltung (1) (application specific integrated circuit - ASIC) für den Einsatz in Übertragungseinrichtungen eines digitalen Netzwerkes, in der ein zu übertragendes Datensignal in Übertragungsrahmen unterteilt sind. Um eine solche Halbleiterschaltung (1) dahingehend weiterzubilden, dass auf externe Testeinrichtungen zur Funktionsprüfung der Halbleiterschaltung (1) verzichtet werden kann, schlägt die Erfindung vor, dass die Halbleiterschaltung (1) eine Schaltung (4) zur Ausführung der ASIC-Funktionen und eine Datentestschaltung (3) mit ersten Mitteln (5) zur Erzeugung eines in Übertragungsrahmen unterteilten Testsignals (6) und mit zweiten Mitteln (7) zur Detektion von Bit-Fehlern in einem empfangenen Testsignal (8) aufweist.

## Beschreibung

Die vorliegende Erfindung betrifft eine anwendungsspezifische Halbleiterschaltung (application specific integrated circuit - ASIC) für den Einsatz in Übertragungseinrichtungen eines digitalen Netzwerkes, in der ein zu übertragendes Datensignal in Übertragungsrahmen unterteilt sind.

Die vorliegende Erfindung betrifft auch eine Übertragungseinrichtung eines digitalen Netzwerks, mit mehreren anwendungsspezifischen Halbleiterschaltungen (application specific integrated circuit - ASIC), und schließlich ein digitales Netzwerk mit Übertragungseinrichtungen, die mehrere anwendungsspezifische Halbleiterschaltungen (application specific integrated circuit - ASIC) aufweisen.

Halbleiterschaltungen der eingangs genannten Art sind in unterschiedlichen Ausführungsformen aus dem Stand der Technik bekannt. In einer Halbleiterschaltung ist bspw. eine Schaltmatrix realisiert, durch die einer oder mehrere Eingänge der Schaltmatrix mit einem oder mehreren Ausgängen der Schaltmatrix verschaltet werden kann. Derartige Halbleiterschaltungen werden bspw. in der Nachrichtentechnik zu Vermittlungszwecken eingesetzt. Eine oder mehrere Halbleiterschaltungen sind üblicherweise in einem Halbleiterbauelement realisiert, das innerhalb einer Übertragungseinrichtung, z. B. einer Sende- oder Empfangseinheit, eines Übertragungsnetzwerkes eingesetzt wird.

In den bekannten Übertragungsnetzwerken sind die zu übertragenden Datensignale üblicherweise in Übertragungsrahmen unterteilt. Ein Übertragungsrahmen weist einen Headerteil, mit einem Rahmenwort zur Kennzeichnung des Anfangs des Übertragungsrahmens, und einen Nutzdatenteil auf. In dem Nutzdatenteil sind die zu übertragenden Daten enthalten. Ein Standard für die Übertragung eines Datensignals in einer solchen Rahmenstruktur ist bspw. der Synchrone Digitale Hierarchie (SDH)-Standard. Die Übertragungsrahmen nach diesem Standard weisen 9 Zeilen und 270 Spalten auf. Die ersten 9 Spalten des Übertragungsrahmens bilden den Headerteil, die restlichen 261 Spalten bilden den Nutzdatenteil. In der ersten Zeile steht am Anfang des Headerteils das sog. Rahmenwort, das auch als Frame Alignment Word (FAW) oder einfach als Frameword bezeichnet wird, und das den Anfang des Übertragungsrahmens kennzeichnet.

Anhand des Rahmenworts kann eine Plausibilitätsprüfung der übertragenen Daten vorgenommen werden. Wird in zwei aufeinander folgende Übertragungsrahmen das Rahmenwort nicht erkannt, so stellt die Halbleiterschaltung die Übertragung der Daten in den Übertragungsrahmen so lange ein, bis sie wieder in zwei aufeinander folgenden Übertragungsrahmen das Rahmenwort erkennt. Außerdem können durch das Rahmenwort die in dem Nutzdatenteil des Übertragungsrahmens enthaltenen Daten einzelnen Signalkanälen zugeordnet werden.

Die Übertragungsrahmen werden üblicherweise mit einer Frequenz von 155 MHz übertragen. Bei dieser Übertragungsrate spricht man von STM-1-Übertragungsrahmen. Es ist auch möglich, die Übertragungsrahmen mit 622 MHz (STM-4-Übertragungsrahmen) oder mit 2,4 GHz (STM-16-Übertragungsrahmen) zu übertragen.

Nach dem Stand der Technik wird die ordnungsgemäße Funktion derartiger Halbleiterschaltungen mittels externer Testeinrichtungen überprüft. Diese Testeinrichtungen weisen bspw. einen externen Signalgenerator zur Erzeugung eines Testsignals und ein externes Meßgerät zum Messen eines Testsignals und zur Detektion von Bit-Fehlern auf. Die Testeinrichtungen können aber auch als Halbleiterbauelemente ausgebildet sein, die innerhalb der Übertragungseinrichtung aber getrennt von den Halbleiterschaltungen der Übertragungseinrichtung angeordnet sind. Diese als Halbleiterbauelemente ausgebildeten Testeinrichtungen sind mit den Halbleiterschaltungen der Übertragungseinrichtung schaltungstechnisch verbunden. Eine solche Testeinrichtung ist bspw. aus dem Artikel "XBERT - A Versatile 622 Mb/sec Bit Error Rate Generator/Receiver", Paul K. Sun, Greg Lowe, Proceedings Sixth Annual IEEE International ASIC Conference and Exhibit New York, NY, USA, 1993 bekannt.

Die dort offenbarte Testeinrichtung verarbeitet Testsignale, die in Übertragungsrahmen untergeteilt sind. Die in Übertragungsrahmen unterteilten Testsignale werden zur Überprüfung der Funktionsfähigkeit von solchen Halbleiterschaltungen benötigt, die lediglich in Übertragungsrahmen unterteilte Datensignale verarbeiten können. In dem Artikel "2.488 Gb/s SONET Multiplexer/ Demultiplexer with Frame Detection Capability", Dennis T. Kong, IEEE Journal on Selected Areas in Communications, Vol. 9, No. 5, June 1991 wird bspw. ein optisches Übertragungsnetzwerk beschrieben, in dem das zu übertragende Datensignal in Übertragungsrahmen unterteilt ist. In dem Artikel werden verschiedene Verfahren zur Unterteilung eines Datensignals in Übertragungsrahmen vorgestellt.

Die bekannten Halbleiterschaltungen haben den Nachteil, daß sie externe Testeinrichtungen zur Funktionsüberprüfung benötigen.

Deshalb ist es eine Aufgabe der vorliegenden Erfindung, eine Halbleiterschaltung der eingangs genannten Art dahingehend auszugestalten und weiterzubilden, daß auf externe Testeinrichtungen zur Funktionsprüfung der Halbleiterschaltung verzichtet werden kann.

Zur Lösung dieser Aufgabe, schlägt die Erfindung ausgehend von der Halbleiterschaltung der eingangs genannten Art vor, daß die Halbleiterschaltung eine Schaltung zur Ausführung der ASIC-Funktionen und eine Datentestschaltung mit ersten Mitteln zur Erzeugung eines in Übertragungsrahmen unterteilten Testsignals und mit zweiten Mitteln zur Detektion von Bit-Fehlern in einem empfangenen Testsignal aufweist.

Die erfindungsgemäße Halbleiterschaltung weist zunächst einmal die Schaltung zur Ausführung der ASIC-Funktionen auf. Diese Schaltung führt die Funktionen herkömmlicher ASICs, wie sie aus dem Stand der Technik bekannt sind, aus. Die erfindungsgemäße Halbleiterschaltung weist darüber hinaus noch eine in die Halbleiterschaltung integrierte Datentestschaltung auf. Durch die Datentestschaltung kann die ordnungsgemäße Funktionsfähigkeit der Schaltung zur Ausführung der ASIC-Funktionen bzw. der gesamten Halbleiterschaltung ohne zusätzliche Testeinrichtungen schnell und einfach überprüft werden. Dadurch kann der Aufwand für die Überprüfung der Funktionsfähigkeit einer Halbleiterschaltung entscheidend reduziert werden.

Die Überprüfung der Funktionsfähigkeit der Halbleiterschaltung kann vor der Inbetriebnahme der Übertragungseinrichtung, in der die Halbleiterschaltung enthalten ist, oder aber ohne großen zusätzlichen Aufwand auch während des Betriebs der Übertragungseinrichtung erfolgen. Das ermöglicht eine online-Überwachung der Halbleiterschaltung oder aber zumindest eine Überwachung zu beliebigen Zeitpunkten während des Betriebs der Übertragungseinrichtung.

Die Mehrkosten für die Datentestschaltung innerhalb der erfindungsgemäßen Halbleiterschaltung sind erheblich geringer als die Kosten für eine gesonderte Testeinrichtung, wie Sie aus dem Stand der Technik bekannt ist. Auch der Aufwand für den Entwurf und die Auslegung der Halbleiterschaltung mit der darin integrierten Datentestschaltung ist wesentlich geringer als der bisher notwendige Aufwand für die Funktionsprüfung einer Halbleiterschaltung mittels einer gesonderten Testeinrichtung.

Die Datentestschaltung der erfindungsgemäßen Halbleiterschaltung erzeugt ein in Übertragungsrahmen unterteiltes Testsignal. Dadurch kann schnell und einfach die ordnungsgemäße Funktionsfähigkeit auch von solchen Halbleiterschaltungen überprüft werden, die mit in Übertragungsrahmen unterteilten Datensignalen arbeiten.

Durch eine entsprechende Auslegung der Datentestschaltung ist mit der erfindungsgemäßen Halbleiterschaltung auch eine Funktionsprüfung der gesamten übergeordneten Schaltung einer Übertragungseinrichtung möglich, in der die Halbleiterschaltung schaltungstechnisch integriert ist. Dazu wird gemäß einer bevorzugten Weiterbildung der Erfindung vorgeschlagen, daß die ersten Mittel der Datentestschaltung mit mindestens einem Ausgang der Halbleiterschaltung verbunden sind. Die ersten Mittel erzeugen ein gerahmtes Testsignal, das durch den Ausgangsteil der übergeordneten Schaltung geführt wird. Am Ausgang der übergeordneten Schaltung wird das Testsignal dann einem externen Meßgerät o. ä. zugeführt, das das empfangene Testsignal mit einem Vergleichssignal vergleicht. Das Vergleichssignal entspricht einem fehlerfreien Testsignal. Auf diese Weise kann der Ausgangsteil der übergeordneten Schaltung überprüft werden.

Gemäß einer anderen vorteilhaften Weiterbildung wird vorgeschlagen, daß die zweiten Mittel der Datentestschaltung mit einem Eingang der Halbleiterschaltung verbunden sind. Gemäß dieser Weiterbildung kann ein gerahmtes Testsignal bspw. von einem externen Signalgenerator erzeugt werden. Das Testsignal wird an den Eingang der übergeordneten Schaltung und durch den Eingangsteil der übergeordneten Schaltung bis zu den zweiten Mitteln der Datentestschaltung der Halbleiterschaltung, die in die übergeordnete Schaltung schaltungstechnisch integriert ist. In den zweiten Mitteln wird das empfangene Testsignal mit einem Vergleichssignal verglichen, das dem fehlerfreien Testsignal entspricht. Auf diese Weise kann der Eingangsteil einer übergeordneten Schaltung überprüft werden.

Es wäre aber auch denkbar, daß der Ausgang der übergeordneten Schaltung extern an den Eingang der übergeordneten Schaltung geführt wird. Dann wird das von den ersten Mitteln der Datentestschaltung erzeugte Testsignal durch den Ausgangsteil der übergeordneten Schaltung zu dem Ausgang, von dort zu dem Eingang und dann durch den Eingangsteil der übergeordneten Schaltung zu den zweiten Mitteln geleitet. Auf diese Weise können der Eingangsteil und der Ausgangsteil einer übergeordneten Schaltung durch die erfindungsgemäße Halbleiterschaltung überprüft werden.

Wenn bspw. in der Schaltung zur Ausführung der ASIC-Funktionen eine Schaltmatrix realisiert ist, durch die einer oder mehrere Eingänge der Schaltmatrix mit einem oder mehreren Ausgängen der Schaltmatrix verschaltet werden kann, wäre es denkbar, den ersten Ausgang der Schaltmatrix mit dem ersten Eingang der Schaltmatrix, den zweiten Ausgang mit dem zweiten Eingang u.s.w. extern zu verbinden, so daß alle Ausgänge der Schaltmatrix jeweils mit einem Eingang der Schaltmatrix verbunden sind. Des weiteren wird die Schaltmatrix derart eingestellt, daß der erste Eingang mit dem zweiten Ausgang, der zweite Eingang mit dem dritten Ausgang u.s.w. innerhalb der Schaltmatrix verschaltet wird. Wenn nun die ersten Mittel der Datentestschaltung mit dem ersten Ausgang der Schaltmatrix und die zweiten Mittel der Datentestschaltung mit dem letzten Eingang der Schaltmatrix verbunden ist, wird ein von den ersten Mitteln erzeugtes Testsignal schleifenförmig durch die gesamte Schaltmatrix bis zu den zweiten Mitteln verlaufen. Auf diese Weise kann auf eine schnelle und einfache Weise die Funktion der gesamten Schaltmatrix überprüft werden.

Falls die Halbleiterschaltung mehrere Eingänge aufweist, sollte die Möglichkeit bestehen, von einem beliebigen der Eingänge der Halbleiterschaltung auf die Datentestschaltung umschalten zu können. Deshalb wird gemäß einer bevorzugten Ausführungsform vorgeschlagen, daß die Halbleiterschaltung einen ersten Multiplexer aufweist, an dessen Eingänge die Eingänge der Halbleiterschaltung geführt sind und dessen Ausgang mit den zweiten Mitteln der Datentestschaltung verbunden ist.

Falls die Halbleiterschaltung mehrere Ausgänge aufweist, sollte die Möglichkeit bestehen, für jeden der Ausgänge der Halbleiterschaltung von den Ausgängen der Schaltung zur Ausführung der ASIC-Funktionen auf den Ausgang der Datentestschaltung umschalten zu können. Deshalb wird gemäß einer weiteren bevorzugten Ausführungsform vorgeschlagen, daß die Halbleiterschaltung eine Vielzahl weiterer Multiplexer aufweist, deren Eingänge jeweils mit den ersten Mitteln und einem Ausgang der Schaltung verbunden sind und deren Ausgang jeweils mit den Ausgängen der Halbleiterschaltung verbunden ist.

Gemäß einer anderen vorteilhaften Weiterbildung der Erfindung wird vorgeschlagen, daß die ersten Mittel der Datentestschaltung mit mindestens einem Eingang der Schaltung zur Ausführung der ASIC-Funktionen und die zweiten Mittel der Datentestschaltung mit mindestens einem Ausgang der Schaltung zur Ausführung der ASIC-Funktionen verbunden sind. Durch diese Weiterbildung kann die Datentestschaltung der erfindungsgemäßen Halbleiterschaltung die ordnungsgemäße Funktion der Schaltung zur Ausführung der ASIC-Funktionen unmittelbar überprüfen. Dazu ist es nicht erforderlich, die Ausgänge der Halbleiterschaltung mit den Eingängen der Halbleiterschaltung extern kurzzuschließen oder die Testsignale über eine übergeordnete Schaltung zu führen, in die die Halbleiterschaltung schaltungstechnisch integriert ist.

Gemäß einer bevorzugten Ausführungsform der vorliegenden Erfindung wird vorgeschlagen, daß die Datentestschaltung mit der Schaltung zur Ausführung der ASIC-Funktionen synchronisiert ist. Die Datentestschaltung kann den gleichen Zeittakt wie die Schaltung zur Ausführung der ASIC-Funktionen aufweisen. Es ist aber auch denkbar, daß ein Bittakt der Schaltung zur Ausführung der ASIC-Funktionen in einen Nibbletakt oder einen Bytetakt der Datentestschaltung umgewandelt wird.

Des weiteren wird vorgeschlagen, daß die Übertragungsrahmen des zu übertragenden Datensignals und des Testsignals nach dem Synchrone Digitale Hierarchie (SDH)-Standard aufgebaut sind und einen Headerteil mit einem den Anfang eines Übertragungsrahmens kennzeichnenden Rahmenwort und einen Nutzdatenteil aufweisen. Es sind externe Testeinrichtungen bekannt, die einen externen Signalgenerator zur Erzeugung eines gerahmten Testsignals nach dem SDH-Standard und ein externes Meßgerät zum Messen eines gerahmten Testsignals nach dem SDH-Standard aufweisen. Ein solcher externer Signalgenerator könnte bspw. ein Testsignal erzeugen und an den Eingang der Halbleiterschaltung anlegen, das dann von den zweiten Mitteln der Datentestschaltung empfangen und auf Bit-Fehler überprüft werden könnte. Ebenso könnten die ersten Mittel ein Testsignal erzeugen und an den Ausgang der Halbleiterschaltung anlegen, das dann von dem externen Meßgerät empfangen und auf Bit-Fehler überprüft werden könnte. Die Verwendung von standardisierten Testsignalen hat den Vorteil, daß die Datentestschaltung problemlos mit kompatiblen externen Testeinrichtungen zusammenarbeiten kann.

Das Testsignal ist vorteilhafterweise in dem Nutzdatenteil des Übertragungsrahmens als ein quasizufälliges Bitmuster abgelegt. Das Testsignal ist vorzugsweise als ein genormtes Testsignal ausgebildet, insbesondere ist das Testsignal als ein nach der CCITT Recommendation 0.15.1.1.1 genormtes Testsignal ausgebildet.

Gemäß einer vorteilhaften Weiterbildung der Erfindung ist die Datentestschaltung mit der Schaltung zur Ausführung der ASIC-Funktionen auf den Anfang eines Übertragungsrahmens synchronisiert. Dazu weist die Schaltung zur Ausführung der ASIC-Funktionen vorteilhafterweise Mittel zur Detektion des Anfangs eines Übertragungsrahmens und zur Erzeugung eines Signals zur Kennzeichnung des Anfangs des Übertragungsrahmens auf. Die Datentestschaltung weist ihrerseits Mittel zum Übermitteln des Signals von der Schaltung zu der Datentestschaltung auf. Das hat den Vorteil, daß die Datentestschaltung keine eigenen Mittel zur Detektion des Anfangs eines Übertagungsrahmens aufweisen muß, sondern daß sie die in der Schaltung zur Ausführung der ASIC-Funktionen enthaltene Mittel zur Detektion des Anfangs eines Übertragungsrahmens nutzen kann. Dadurch wird der Aufbau der Datentestschaltung erheblich vereinfacht.

Gemäß einer anderen vorteilhaften Weiterbildung wird vorgeschlagen, daß die zweiten Mittel zur Detektion von Bit-Fehlern einen Fehlerzähler aufweisen, der im Falle der Detektion eines Bit-Fehlers erhöhbar ist. Vorzugsweise wird der Fehlerzähler um Eins erhöht, wenn die zweiten Mittel der Datentestschaltung einen Bit-Fehler detektieren. Ein Bit-Fehler kann grundsätzlich unterschiedliche Ursachen haben. Wenn eine Halbleiterschaltung falsch ausgelegt oder die Leiterbahnen der Halbleiterschaltung einen Kurzschluß aufweisen, werden bei der Funktionsprüfung der Halbleiterschaltung eine Vielzahl von Bit-Fehlern auftreten. Wenn der Fehlerzähler nach einer Funktionsprüfung der Halbleiterschaltung jedoch nur ein oder zwei Bit-Fehler anzeigt, ist dies ein Indiz dafür, daß nicht die Auslegung der Halbleiterschaltung fehlerhaft ist, sondern daß bspw. Taktleitungen zu dicht neben Datenleitungen verlaufen oder daß die Flanken der Signale nicht steil genug sind. Solche Fehler führen nur manchmal zu einem Bit-Fehler. Durch einen Fehlerzähler können die auftretenden Bit-Fehler also klassifiziert werden.

Am Ende der Funktionsprüfung kann die Anzahl der detektierten Fehler ausgegeben werden. Es ist aber auch denkbar, daß erst dann eine Fehlermeldung ausgegeben wird, wenn der Fehlerzähler einen bestimmten Wert überschritten hat. Es ist des weiteren denkbar, daß die Überprüfung der Halbleiterschaltung abgebrochen wird, wenn der Fehlerzähler einen bestimmten Wert überschreitet.

Gemäß einer bevorzugten Ausführungsform weist die Datentestschaltung eine Verbindungsleitung zwischen den ersten Mitteln zur Erzeugung des Testsignals und den zweiten Mitteln zur Detektion von Bit-Fehlern auf. Über die Verbindungsleitung kann ein Selbsttest der ersten Mittel und der zweiten Mittel der Datentestschaltung durchgeführt werden.

Gemäß einer anderen vorteilhaften Weiterbildung der vorliegenden Erfindung wird vorgeschlagen, daß die zweiten Mittel zur Detektion von Bit-Fehlern Mittel zur Erzeugung eines Vergleichssignals und Mittel zum Vergleich des empfangenen Testsignals mit dem Vergleichssignal aufweisen. Das Vergleichssignal ist vorzugsweise identisch mit dem von den ersten Mitteln erzeugten Testsignal. Das bedeutet, daß auch das Vergleichssignal eine Rahmenstruktur aufweist. Das Vergleichssignal wird mit dem empfangenen Testsignal verglichen, das durch die Schaltung zur Ausführung der ASIC-Funktionen, durch die gesamte Halbleiterschaltung und/oder durch eine übergeordnete Schaltung, in die die Halbleiterschaltung integriert ist, geführt worden ist. Wenn das Testsignal von dem Vergleichssignal abweicht, liegt ein Bit-Fehler vor.

Gemäß einer bevorzugten Ausführungsform ist die gesamte Halbleiterschaltung in einem Halbleiterbauelement realisiert. Ein solches Halbleiterbauelement kann wie ein herkömmlicher ASIC in eine übergeordnete Schaltung einer Übertragungseinrichtung, bspw. einer Sende- oder Empfangseinheit, eines digitalen Netzwerkes schaltungstechnisch integriert werden, ohne daß es dafür einer Änderung oder Anpassung der Schaltung bedarf.

Eine weitere Aufgabe der vorliegenden Erfindung besteht darin, eine Übertragungseinrichtung der eingangs genannten Art dahingehend auszugestalten und weiterzubilden, daß auf externe Testeinrichtungen zur Funktionsprüfung der Halbleiterschaltungen verzichtet werden kann.

Zur Lösung dieser Aufgabe schlägt die Erfindung ausgehend von der Übertragungseinrichtung der eingangs genannten Art vor, daß die Übertragungseinrichtung mindestens eine Halbleiterschaltung nach zumindest einem der Ansprüche 1 bis 18 aufweist. Die Übertragungseinrichtung kann bspw. als Sende- oder Empfangseinheit des digitalen Netzwerks ausgebildet sein.

Eine weitere Aufgabe der vorliegenden Erfindung besteht darin, ein digitales Netwerk der eingangs genannten Art dahingehend auszugestalten und weiterzubilden, daß auf externe Testeinrichtungen zur Funktionsprüfung einer Halbleiterschaltung einer Übertragungseinrichtung verzichtet werden kann.

Zur Lösung dieser Aufgabe schlägt die Erfindung ausgehend von dem digitalen Netzwerk der eingangs genannten Art vor, daß mindestens eine der Übertragungseinrichtungen mindestens eine Halbleiterschaltung nach zumindest einem der Ansprüche 1 bis 18 aufweist.

Ein bevorzugtes Ausführungsbeispiel der vorliegenden Erfindung wird im Folgenden anhand der Zeichnungen näher erläutert. Es zeigen:
- Figur 1: eine erfindungsgemäße Halbleiterschaltung gemäß einer bevorzugten Ausführungsform; und
- Figur 2: eine Datentestschaltung der Halbleiterschaltung aus Figur 1 im Ausschnitt.

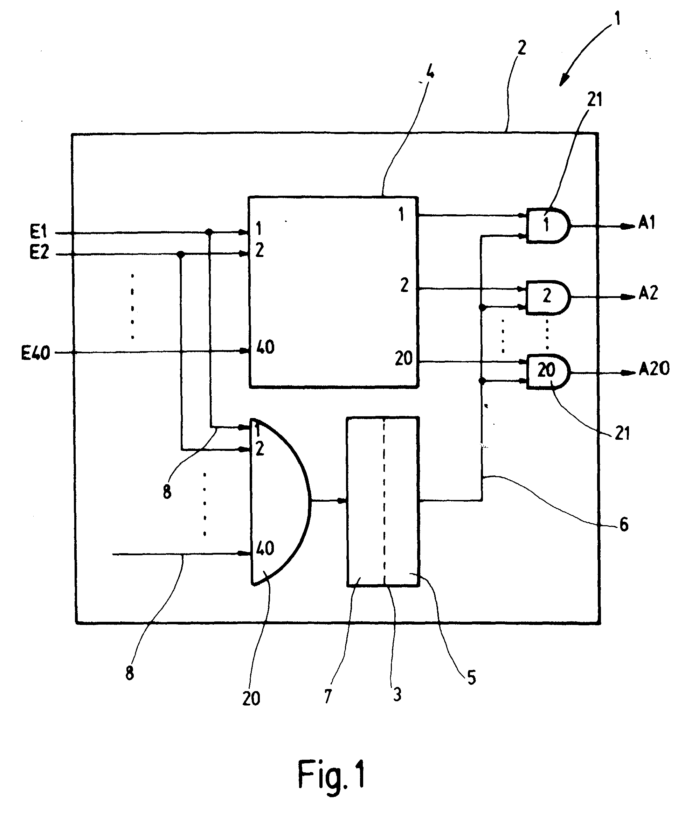

In Figur 1 ist eine erfindungsgemäße anwendungsspezifische Halbleiterschaltung in ihrer Gesamtheit mit dem Bezugszeichen 1 gekennzeichnet. Eine solche Halbleiterschaltung 1 wird auch als Application Specific Integrated Circuit (ASIC) bezeichnet. Die erfindungsgemäße Halbleiterschaltung 1 wird in Schaltungen von Übertragungseinrichtungen (nicht dargestellt) von digitalen Netzwerken eingesetzt. Als Übertragungseinrichtung des digitalen Netzwerks werden bspw. Sende- oder Empfangseinrichtungen des digitalen Netzwerks bezeichnet. Die in den Übertragungseinrichtungen zu übertragenden Datensignale sind in Übertragungsrahmen unterteilt. Die Übertragungsrahmen entsprechen dem sog. Synchrone Digatale Hierarchie (SDH)-Standard und weisen einen Headerteil mit einem Rahmenwort zur Kennzeichnung des Anfangs des Übertragungsrahmens und einen Nutzdatenteil auf, in dem die zu übertragenden Datensignale enthalten sind.

Die Halbleiterschaltung 1 ist in einem Halbleiterbauelement 2 realisiert. Dieses Halbleiterbauelement 2 ist vorzugsweise von seinen Abmessungen und von seinen Schnittstellen her mit den ASICs herkömmlicher Art kompatibel.

Die Halbleiterschaltung 1 weist eine Datentestschaltung 3 und eine Schaltung 4 auf, welche die eigentliche Funktion der anwendungsspezifischen Halbleiterschaltung 1 innerhalb der Übertragungseinrichtung übernimmt. Die Datentestschaltung 3 dient zur Überprüfung der Funktionsfähigkeit der Schaltung 4, der gesamten Halbleiterschaltung 1, d.h. der Schaltung 4 und der Datentestschaltung 3, und/oder einer übergeordneten Schaltung der Übertragungseinrichtung, in die die Halbleiterschaltung 1 integriert ist. Die Datentestschaltung 3 weist erste Mittel 5 zur Erzeugung eines Testsignals 6 und zweite Mittel 7 zur Detektion von Bit-Fehlern in einem empfangenen Testsignal 8 auf.

Die Halbleiterschaltung 1 weist einen ersten Multiplexer 20 auf, an dessen Eingänge die Eingänge E1, E2, ..., E40 der Halbleiterschaltung 1 geführt sind. Der Ausgang des Multiplexers 20 ist mit den zweiten Mitteln 7 der Datentestschaltung 3 verbunden. Dadurch kann von einem beliebigen der Eingänge E1, E2, ..., E40 der Halbleiterschaltung 1 auf die Datentestschaltung 3 umgeschaltet werden. Die Halbleiterschaltung 1 weist außerdem eine Vielzahl weiterer Multiplexer 21 auf, deren Eingänge jeweils mit den ersten Mitteln 5 und einem Ausgang der Schaltung 4 verbunden sind. Der Ausgang der Multiplexer 21 ist jeweils mit den Ausgängen A1, A2, ..., A20 der Halbleiterschaltung 1 verbunden. Dadurch kann für jeden der Ausgänge A1, A2, ..., A20 der Halbleiterschaltung 1 von einem der Ausgänge der Schaltung 4 auf den Ausgang der Datentestschaltung 3 umgeschaltet werden.

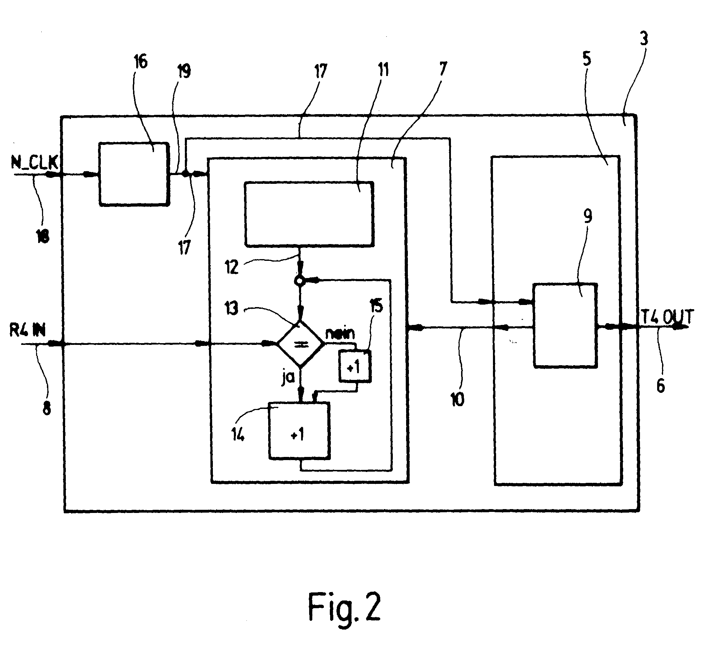

Die Funktion der erfindungsgemäßen Halbleiterschaltung 1 wird nachfolgend an Hand der Figur 2 näher erläutert. Die ersten Mittel 5 zur Erzeugung des Testsignals 6 weisen Mittel 9 zur Anordnung des Testsignals 6 in den Übertragungsrahmen nach einem quasizufälligen Bitmuster auf. Die Datentestschaltung 3 weist außerdem eine Verbindungsleitung 10 zwischen den ersten Mitteln 5 zur Erzeugung des Testsignals 6 und den zweiten Mitteln 7 zur Detektion von Bit-Fehlern auf. Die Verbindungsleitung 10 dient zum Selbsttest der ersten Mittel 5 und der zweiten Mittel 7 der Datentestschaltung 3.

Die zweiten Mittel 7 zur Detektion von Bit-Fehlern weisen Mittel 11 zur Erzeugung eines Vergleichsignals 12 auf. Auch das Vergleichssignal 12 ist in einer Rahmenstruktur angeordnet und weist ein quasizufälliges Bitmuster auf. Das Vergleichssignal 12 ist identisch mit dem Testsignal 6. Die zweiten Mittel 7 weisen des weiteren Mittel 13 zum Vergleich des Vegleichssignals 12 mit dem empfangenen Testsignal 8 auf. Falls das Vergleichssignal 12 und das empfangene Testsignal 8 übereinstimmen, d.h. falls kein Bit-Fehler vorliegt, wird ein Zeiger 14 auf den nachfolgenden Übertragungsrahmen gesetzt und der Vergleich wiederholt. Falls jedoch ein Bit-Fehler vorliegt, wird ein Fehlerzähler 15 um Eins inkrementiert, bevor die nachfolgenden Übertragungsrahmen des Vergleichssignals 12 und des Testsignals 8 miteinander verglichen werden.

Die Datentestschaltung 3 weist einen Zeittaktgeber 16 mit Verbindungsleitungen 17 zu den ersten Mitteln 5 und zu den zweiten Mitteln 7 auf. An der Halbleiterschaltung 1 liegt von der übergeordneten Schaltung der Übertragungseinrichtung ein Bittakt 18 an, und der Zeittaktgeber 16 weist Mittel zum Umwandeln des Bittakts 18 in einen Bytetakt 19 auf.

## Patentansprüche

1. Anwendungsspezifische Halbleiterschaltung (1) (application specific integrated circuit - ASIC) für den Einsatz in Übertragungseinrichtungen eines digitalen Netzwerkes, in der ein zu übertragendes Datensignal in Übertragungsrahmen unterteilt sind, **dadurch gekennzeichnet,** daß die Halbleiterschaltung (1) eine Schaltung (4) zur Ausführung der ASIC-Funktionen und eine Datentestschaltung (3) mit ersten Mitteln (5) zur Erzeugung eines in Übertragungsrahmen unterteilten Testsignals (6) und mit zweiten Mitteln (7) zur Detektion von Bit-Fehlern in einem empfangenen Testsignal (8) aufweist.

2. Halbleiterschaltung (1) nach Anspruch 1, dadurch gekennzeichnet, daß die ersten Mittel (5) der Datentestschaltung (3) mit mindestens einem Ausgang der Halbleiterschaltung (1) verbunden sind.

3. Halbleiterschaltung (1) nach Anspruch 1 oder 2, dadurch gekennzeichnet, daß die zweiten Mittel (7) der Datentestschaltung (3) mit einem Eingang der Halbleiterschaltung (1) verbunden sind.

4. Halbleiterschaltung (1) nach Anspruch 2 oder 3, dadurch gekennzeichnet, daß die Halbleiterschaltung (1) einen ersten Multiplexer aufweist, an dessen Eingänge die Eingänge der Halbleiterschaltung (1) geführt sind und dessen Ausgang mit den zweiten Mitteln (7) der Datentestschaltung (3) verbunden ist.

5. Halbleiterschaltung (1) nach einem der Ansprüche 2 bis 4, dadurch gekennzeichnet, daß die Halbleiterschaltung (1) eine Vielzahl weiterer Multiplexer aufweist, deren Eingänge jeweils mit den ersten Mitteln (5) und einem Ausgang der Schaltung (4) zur Ausführung der ASIC-Funktionen verbunden sind und deren Ausgang jeweils mit den Ausgängen der Halbleiterschaltung (1) verbunden ist.

6. Halbleiterschaltung (1) nach Anspruch 1, dadurch gekennzeichnet, daß die ersten Mittel (5) der Datentestschaltung (3) mit mindestens einem Eingang der Schaltung (4) zur Ausführung der ASIC-Funktionen und die zweiten Mittel (7) der Datentestschaltung (3) mit mindestens einem Ausgang der Schaltung (4) zur Ausführung der ASIC-Funktionen verbunden sind.

7. Halbleiterschaltung (1) nach einem der Ansprüche 1 bis 6, dadurch gekennzeichnet, daß die Datentestschaltung (3) mit der Schaltung (4) zur Ausführung der ASIC-Funktionen synchronisiert ist.

8. Halbleiterschaltung (1) nach einem der Ansprüche 1 bis 7, dadurch gekennzeichnet, daß die Übertragungsrahmen des zu übertragenden Datensignals und des Testsignals nach dem Synchrone Digitale Hierarchie (SDH)-Standard aufgebaut sind und einen Headerteil mit einem den Anfang eines Übertragungsrahmens kennzeichnenden Rahmenwort und einen Nutzdatenteil aufweisen.

9. Halbleiterschaltung (1) nach Anspruch 8, dadurch gekennzeichnet, daß das Testsignal in dem Nutzdatenteil des Übertragungsrahmens als ein quasizufälliges Bitmuster abgelegt ist.

10. Halbleiterschaltung (1) nach Anspruch 9, dadurch gekennzeichnet, daß das Testsignal als ein genormtes Testsignal ausgebildet ist.

11. Halbleiterschaltung (1) nach Anspruch 10, dadurch gekennzeichnet, daß das Testsignal als ein nach der CCITT Recommendation 0.15.1.1.1 genormtes Testsignal ausgebildet ist.

12. Halbleiterschaltung (1) nach einem der Ansprüche 8 bis 11, dadurch gekennzeichnet, daß die Datentestschaltung (3) mit der Schaltung (4) zur Ausführung der ASIC-Funktionen auf den Anfang eines Übertragungsrahmens synchronisiert ist.

13. Halbleiterschaltung (1) nach Anspruch 12, dadurch gekennzeichnet, daß die Schaltung (4) zur Ausführung der ASIC-Funktionen Mittel zur Detektion des Anfangs eines Übertragungsrahmens und zur Erzeugung eines Signals zur Kennzeichnung des Anfangs des Übertragungsrahmens aufweist und daß die Datentestschaltung (3) Mittel zum Übermitteln des Signals von der Schaltung (4) zur Ausführung der ASIC-Funktionen zu der Datentestschaltung (3) aufweist.

14. Halbleiterschaltung (1) nach einem der Ansprüche 1 bis 13, dadurch gekennzeichnet, daß die zweiten Mittel (7) zur Detektion von Bit-Fehlern einen Fehlerzähler (15) aufweisen, der im Falle der Detektion eines Bit-Fehlers erhöhbar ist.

15. Halbleiterschaltung (1) nach einem der Ansprüche 1 bis 14, dadurch gekennzeichnet, daß die Datentestschaltung (3) eine Verbindungsleitung (10) zwischen den ersten Mitteln (5) zur Erzeugung des Testsignals (6) und den zweiten Mitteln (7) zur Detektion von Bit-Fehlern aufweist.

16. Halbleiterschaltung (1) nach einem der Ansprüche 1 bis 15, dadurch gekennzeichnet, daß die zweiten Mittel (7) zur Detektion von Bit-Fehlern Mittel (11) zur Erzeugung eines Vergleichssignals und Mittel (13) zum Vergleich des empfangenen Testsignals mit dem Vergleichssignal aufweisen.

17. Halbleiterschaltung (1) nach Anspruch 16, dadurch gekennzeichnet, daß das Vergleichssignal identisch ist mit dem von den ersten Mitteln (5) erzeugten Testsignal.

18. Halbleiterschaltung (1) nach einem der Ansprüche 1 bis 17, dadurch gekennzeichnet, daß die gesamte Halbleiterschaltung (1) in einem Halbleiterbauelement realisiert ist.

19. Übertragungseinrichtung eines digitalen Netzwerks, mit mehreren anwendungsspezifischen Halbleiterschaltungen (1) (application specific integrated circuit - ASIC), **dadurch gekennzeichnet,** daß die Übertragungseinrichtung mindestens eine Halbleiterschaltung (1) nach zumindest einem der Ansprüche 1 bis 18 aufweist.

20. Digitales Netwerk mit Übertragungseinrichtungen, die mehrere anwendungsspezifische Halbleiterschaltungen (1) (application specific integrated circuit - ASIC) aufweisen, **dadurch gekennzeichnet,** daß mindestens eine der Übertragungseinrichtungen mindestens eine Halbleiterschaltung (1) nach zumindest einem der Ansprüche 1 bis 18 aufweist.
